# EUROPEAN PATENT SPECIFICATION

(11) **EP 2 130 349 B1**
(45) Date of publication and mention of the grant of the patent: **01.08.2012**
(21) Application number: 08718305.9
(22) Date of filing: 28.03.2008
(51) Int. Cl.: H02H 1/00, H04L 29/06, H02J 13/00, G06F 17/30, H04L 12/66, H04L 12/24, H04L 29/08, H02H 7/26

(54) **METHOD OF CONFIGURING AN INTELLIGENT ELECTRONIC DEVICE**
VERFAHREN ZUM KONFIGURIEREN EINER INTELLIGENTEN ELEKTRONISCHEN ANORDNUNG
PROCÉDÉ DE CONFIGURATION DE DISPOSITIF ÉLECTRONIQUE INTELLIGENT

(30) Priority: 30.03.2007 EP 07105374
(43) Date of publication of application: 09.12.2009
(73) Proprietor: ABB Technology AG, 8050 Zürich (CH)
(72) Inventor: WIMMER, Wolfgang, CH-5323 Rietheim (CH); HOHLBAUM, Frank, DE-79713 Bad Säckingen (DE); SERVOZ, Jean, CH-5432 Neuenhof (CH); HILPERT, Gunnar, DE-79790 Küssaberg (DE); STAWISKI, Wladyslaw, CH-5236 Remigen (CH)
(74) Representative: ABB Patent Attorneys
(86) International application number: PCT/EP2008/053695
(87) International publication number: WO 2008/119750

(56) References cited:
- WO-A-2005/055538
- WO-A-2006/017944
- KEZUNOVI M ET AL: "Automated Monitoring and Control Using New Data Integration Paradigm" PROCEEDINGS OF THE 38TH HAWAII INTERNATIONAL CONFERENCE ON SYSTEM SCIENCE, 3 January 2005 (2005-01-03), pages 66a-66a, XP010762451
- KOSTIC T ET AL: "TOWARDS THE FORMAL INTEGRATION OF TWO UPCOMING STANDARDS: IEC61970 AND IEC61850" LESCOPE. LARGE ENGINEERING SYSTEMS CONFERENCE ON POWER ENGINEERING CONFERENCE PROCEEDINGS. ENERGY FOR THE FUTURE, XX, XX, 7 May 2003 (2003-05-07), pages 24-29, XP008050807

## Description

### FIELD OF THE INVENTION

The present invention relates to the field of Substation Automation (SA) systems with a standardized configuration representation. More particularly, it relates to a method to convert data from a simple protocol to one with standardized application semantics such as defined by IEC 61850. The present invention departs from a method for configuring an IEC 61850 - compliant Intelligent Electronic Device (IED) as described in the preamble of claim 1.

### BACKGROUND OF THE INVENTION

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. There are secondary devices in the SA system, responsible for protecting, controlling, measuring and monitoring. The SA system comprises the secondary SA devices such as digital relays, which are interconnected in an SA communication network, and interact with the primary devices via a process interface. A station level of the SA system includes an Operator Work Station (OWS) with a Human-Machine Interface (HMI). Further, the SA system includes a gateway to a Network Control Centre (NCC). The NCC hosts a central Energy Management System (EMS) and/or a Supervisory Control And Data Acquisition (SCADA) system for managing power generation and load flow to consumers. Bay units for protection, control and measurement are connected to each other and to the aforementioned other SA devices on the station level via an inter-bay or station bus.

SA systems today require interoperability between all substation devices. This requires that the substation devices from different manufacturers should be interoperable with each other. To achieve this, an internationally accepted communication standard for communication between the secondary devices of a substation has been introduced by the International Electrotechnical Committee (IEC), as part of the standard IEC 61850 entitled "communication networks and systems in substations". All IEC 61850-compliant devices connected to the SA network are called Intelligent Electronic Devices (IED).

IEC 61850 defines an abstract object model for compliant substations and a method for accessing these objects over a network. This allows the substation-specific applications such as the OWS, to operate with standard objects, while the actual objects in the substation may be realized differently by the IEDs of different manufacturers. The abstract object model according to the above standard represents the SA functionality in terms of the logical nodes within the logical devices that are allocated to the IEDs as the physical devices. The actual communication between the IEDs is handled, for non-time critical messages, via IEC 61850 protocols with a Manufacturing Message Specification (MMS) communication stack built on Open Systems Interconnection (OSI), Transmission Control Protocol (TCP), Internet Protocol (IP), and Ethernet. IEC 61850 protocols are client-server based, which allows several clients to access data from a same server, define the semantics of the data within the substation in a standardized object-oriented way, and offer a standardized method to transfer data between different engineering tools in a standardized format.

One consequence of the aforementioned interoperability requirement is that the IEDs from different suppliers may be combined into one SA system. Since the IEDs are initially configured during an engineering phase, the corresponding dedicated engineering or SA configuration tools of different suppliers need to be able to exchange information about the IEDs. To this effect, the complete SA system, with all its primary devices, IEDs and communication links must be specified in a computer-readable way. This is enabled by the comprehensive XML-based Substation Configuration description Language (SCL) that is part of the IEC 61850 standard. In short, the IEC 61850 SCL language provides for a standardized description of the primary devices, the secondary devices with their protecting, controlling and monitoring (PCM) functions, the logical structure of the communication system, and the relation between the IEDs and the primary devices. Therefore, IEC 61850 SCL enables an automated configuration of both communication and IEDs.

The SCL language is used to describe the capabilities of a particular IED or IED type in an IED Capability Description (ICD) file. The IED Capability Description (ICD) file lists the application functions of a physical device, for example, its implemented protection functionality. A Substation Configuration Description (SCD) file in the SCL language describes the primary objects, the functions implemented in each IED in terms of logical nodes, and the communication connections of a particular substation. Therefore, the SCD file comprises (1) a switch yard naming and topology description, (2) an IED configuration description, (3) the relationships between switch yard elements and IED functions, and (4) a description of a communication network. Accordingly, if a particular IED is used within an SA system, an object instance of the IED type is inserted into the corresponding SCD file. The SCL language then allows specifying typical or individual values for the data attributes carried by the data instance, related to the particular IED, e.g., the values of the configuration attributes and setting parameters. The connection between the power process and the SA system is described in an SCL by allocating or attaching logical nodes to the elements of the primary equipment. The semantic meaning of a function within an SA system is determined by the logical node type or class, in combination with the switch yard and/or bay to which it is allocated.

Despite the existence of the standard IEC 61850 protocol for Substation Automation (SA) systems, SA devices exist that use formerly used transmission protocols such as IEC 60870-5-101 (basic tele-control messages), 60870-5-104 (Network access for IEC 60870-5-101) or 60870-5-103 (interface of protection equipment) as well as manufacturer-specific protocols. These SA devices need to be included in SA systems that are compliant to IEC 61850. Likewise, existing Network Control Centers (NCCs) still use old protocols such as IEC 60870-101, IEC 60870-104 or old manufacturer-specific ones to communicate with the gateway at the station level. All these protocols are collectively referred to as pre-IEC 61850 protocols and are essentially data-value transfer protocols, with only the IEC 60870-5-103 protocol containing some semantics from the protection area. Besides, their communication procedure is generally simple, i.e., of the master-slave type, allowing only a single master per slave device.

Hence, for interoperability of IEDs and later secondary system retrofit, the conversion of earlier protocols to the IEC 61850 protocol offers a lot of advantages. NCC and proxy gateways have been known for some time. They readily convert and translate the IEC 61850 protocol data to earlier protocols that are still used by many existing NCCs and SA devices. However, engineering and configuration testing of these protocol converters is prone to error and is time-consuming. It is error-prone because only informal signal descriptions are used and some 'number' addresses on one side have to be mapped, signal by signal, to some other 'number' addresses on the other side.

A special proxy gateway to IEC 61850 is described in WO2005/055538 A1 that converts data from the 'old' protocols to Ethernet as a common medium, and then transfers this medium to the proxy gateway, which converts this message into the IEC 61850 format and sends it to the same physical Ethernet bus again. This method of "tunneling" doubles the load on the Ethernet bus, because each message is sent once in the old format and once in the new one.

WO 2006/017944 A1 discloses a system and method for converting a file that is based on a first standard (IEC61970) to a file that is based on a second standard (IEC61850).

The article "Automated Monitoring and Control Using New Data Integration Paradigm", Proceedings of the 38th Hawaii International Conference on Systems Science, 2005, XP010762451, by M. Kezunovic et al., discloses a new paradigm for data integration where substation field data is used to supplement Remote Terminal Unit data for Supervisory Control and Data Acquisition (SCADA) in power system control applications.

### DESCRIPTION OF THE INVENTION

It is therefore an objective of the invention to simplify the engineering of a Substation Automation (SA) system comprising a mix of IEC 61850-compliant Intelligent Electronic Devices (IEDs) and SA devices that do not adhere to IEC 61850 communication protocols. These objectives are achieved by a method and device, according to claims 1 and 6, respectively. Further, preferred embodiments are evident from the dependent patent claims.

According to the invention, exemplary data such as status signals, events, alarms, measurements and disturbance recordings, typically received over a master-slave connection from an SA device or a remote Network Control Centre (NCC) that does not adhere to IEC 61850 communication protocols, and to be transmitted according to IEC 61850 protocols, is converted between the two protocols by a proxy IED, i.e., a particular IED acting as a proxy to another IED performing protection, monitoring and control tasks. This proxy IED for converting data from a pre-IEC 61850 communication protocol into a IEC 61850 protocol and/or for converting data in the opposite direction is configured by means of a Substation Configuration Description (SCD) file according to IEC 61850. Therefore, the dedicated system engineering or SA configuration tools, required to configure the protection, control and monitoring IEDs during the system engineering process, may be similarly used for configuring the proxy IED. This results in increasingly simplified and automated SA application engineering, and consequently, less commissioning efforts.

Preconfigured function mappings are available for the earlier IEC 60870-5-103 protocols, which enable the establishment of proxy configuration information in a manufacturer-independent way. For other earlier protocols without standardized application semantics, such as all the signals, the process of mapping to appropriate IEC 61850 data templates needs to be elaborated manually and individually for each type of SA device. In contrast thereto, using preconfigured function mappings for whole functions instead of proceeding signal by signal considerably accelerates the proxy configuration.

Each of the two distinct protocols are sets of rules that determine the behaviour of functional units in achieving and performing communication, and may consist of a plurality of protocols, i.e., a protocol suite, stack or family. Contrary to pure data or data-type conversion, i.e., from 16 to 32 bit or from INTEGER to REAL, protocol conversion also changes the way the data is coded and functionally accessed. According to IEC 61850, the SCD file comprising the mappings or rules for protocol conversion is represented in a standardized format, i.e., according to the Substation Configuration description Language (SCL), with its standardized syntax defined in an XML schema.

In a preferred variant of the invention, a proxy IED offers the converted data from the SA devices via the IEC 61850 protocol, and therefore, is an IEC 61850 server for the other IEDs. As a result, the other IEDs may access the data from the SA devices without any knowledge about the non-IEC 61850 protocols employed between the latter and the proxy IED. Preferably, and in order to comply with requirements of the 61850 protocols, all mandatory IEC 61850 signals, which cannot be generated and/or delivered by the SA devices, are elaborated or synthesized by the proxy IED based on the data delivered by, and/or general knowledge available about, the SA devices.

In another preferred variant of the invention, IEC 60870-5-103 Disturbance Recorder (DR) files are uploaded to the proxy IED, temporarily stored at the proxy IED, and sent via IEC 61850 file transfers to any IEC 61850 client requesting it. Disturbance Recorder files are usually stored on the protection SA device, their loss due to SA device failure being prevented by the said intermediate storage. At the proxy IED, the DR files are converted to a Comtrade format. A plurality (preferably 10) of DR files is stored in a flash memory of the proxy. They can subsequently be read by disturbance data transfer and evaluation programs of the IEC 61850 clients as IEC 61850 files, without any knowledge about the earlier protocols.

In an advantageous embodiment of the invention, the proxy IED integrates, in a single device, both the conversion from the earlier protocols and the conversion to a Network Control Centre (NCC) protocol such as IEC 60870-5-104 or DNP. In other words, the proxy IED acts additionally as an NCC gateway, i.e., the data gathered from the SA devices with earlier protocols can also be sent to an NCC, in addition to the subsequent IEC 61850 clients on a station bus. The communication to the NCC may involve an IEC 60870-5-104 format on the same or another (physical) Ethernet port rather than the station bus, or may involve IEC 60870-5-101 or similar Universal Asynchronous Receiver/Transmitter (UART)-based protocols via separate serial ports and modems. Hence, in the first case, two ports (1 Ethernet, 1 other/arbitrary) are sufficient, whereas in the second case, a third serial port or modem is required. In this embodiment, data from the other IEC 61850 devices in the SA system, to which the NCC gateway, running on the same hardware as the Proxy gateway, is an IEC 61850 client, can be merged into these NCC level data streams. Nevertheless, for reasons of availability, it may be preferable to have the functionality of the proxy IED and the functionality of the NCC gateway executed by two devices, which, however, may be identical from a hardware point of view.

Although the present application focuses on Substation Automation, it is evident that the principles and methods are also applicable to other technical domains characterized by different data models such as wind and hydro power, and Distributed Energy Resources (DER).

The present invention also relates to a computer program product, in particular a Substation Configuration Description (SCD) file, to control one or more processors of an IEC 61850-compliant Intelligent Electronic Device (IED), to convert data between a non-IEC 61850 communication protocol and an IEC 61850 communication protocol.

### BRIEF DESCRIPTION OF THE DRAWINGS

The subject matter of the invention will be explained in more detail in the following text with reference to preferred exemplary embodiments which are illustrated in the attached drawings, in which:
Fig. 1 schematically shows an SA system with a station bus, proxy and gateway that are separated, in accordance with an embodiment of the present invention;
Fig. 2 schematically shows an SA system with a combined proxy and gateway, in accordance with an embodiment of the present invention;
Fig. 3 is an excerpt of a proxy IED configuration file (proxy.icd) including IEC 103 signals to IEC 61850 conversion configuration, in accordance with an embodiment of the present invention;
Fig. 4 to Fig. 7 are flowcharts of methods for configuring an IED in a Substation Automation (SA) system, in accordance with various embodiments of the present invention.

The reference symbols used in the drawings, and their meanings, are listed in a summary form in the list of reference symbols. In principle, identical parts are provided with the same reference symbols in the figures.

### DETAILED DESCRIPTION OF PREFERRED EMBODIMENTS

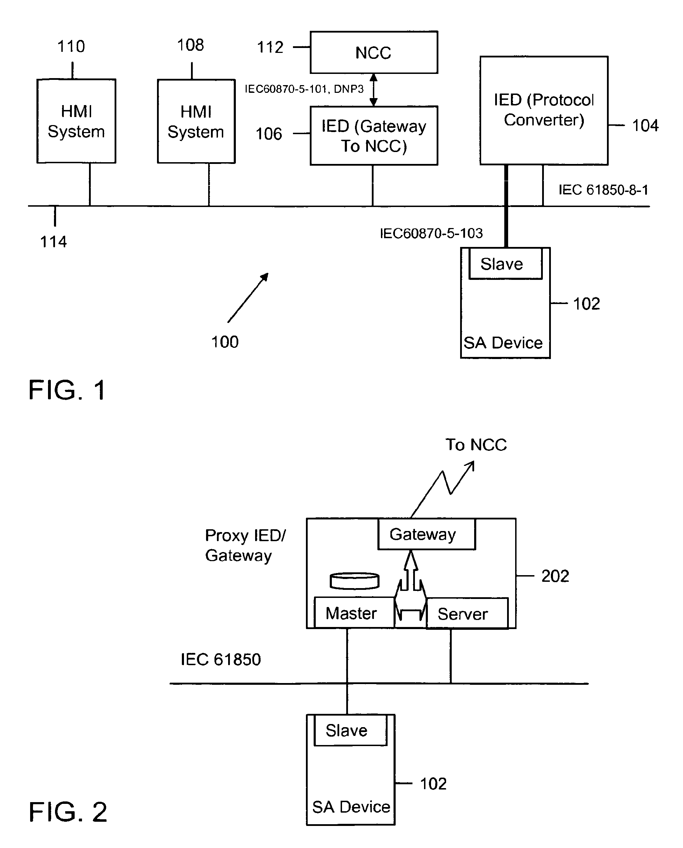

Fig. 1 schematically shows an SA system 100 with a SA device 102, proxy IED 104 and proxy IED 106 functioning as gateway, in accordance with an embodiment of the present invention. Further, SA system 100 includes SA device 102 that is connected to proxy IED 104, and redundant HMI systems 108 and 110. Proxy IEDs 104 and 106, HMI systems 108 and 110 are all connected through a station bus 114.

A proxy IED is a device that offers a network service to allow SA devices to make indirect connections with other network devices in SA system 100. An SA device connects to the proxy IED, and then may request for information available on another device. Further, SA device 102 is a device in SA system 100, which complies with pre-IEC 61850 communication protocols. In accordance with an embodiment of the present invention, SA device 102 communicates with proxy IED 104 through non-IEC 61850 protocols such as IEC 60870-5-103. Communication between SA device 102 and proxy IED 104 is of the master-slave type, indicating unidirectional control. In this case, proxy IED 104 acts as a master with a unidirectional control over SA device 102, which is a slave. Proxy IEDs 104 and 106, and HMI systems 108 and 110, are connected to station bus 114 and communicate through IEC 61850 protocols. Proxy IEDs 104 and 106 in SA system 100 communicate through IEC 61850 protocols with a Manufacturing Message Specification (MMS) communication stack. The MMS communication stack can be built on at least one Open Systems Interconnection (OSI), Transmission Control Protocol (TCP), Internet Protocol (IP) or Ethernet. In addition, proxy IED 106 acts as a gateway to a Network Control Centre (NCC). An NCC is a set of data-processing units that control the functioning of a power system. Proxy IED 106 communicates with the NCC through protocols such as IEC 60870-5-101, IEC 60870-5-104 or others.

Proxy IED 104 receives data from SA device 102, according to non-IEC 61850 protocols, and converts the received data according to IEC 61850 protocols. Proxy IED 104 performs protocol conversion according to mappings for converting data between IEC 61850 protocol and non-IEC 61850 protocols. Examples of the data include, but are not limited to, status signals, events, alarms, measurements and monitoring signals. The mappings are represented or coded in a Substation Configuration Description (SCD) file. Proxy IED 104 in SA system 100 is configured according to the mappings in the SCD file. These mappings are coded in a mark up language such as XML-based Substation Configuration Language (SCL). The SCD file defines the inter-relations of the devices in SA system 100 with each other and the entire substation. The SCD file contains either the mappings for each signal generated, or pre-defined templates for mapping the entire functions. In addition, proxy IED 104 is configured to generate and share a number of signals that cannot be generated by SA device 102 but need to be shared with other IEDs in SA system 100.

Fig. 2 schematically shows SA system 100 with a combined proxy and gateway. Proxy IED 202 is a proxy IED, which performs protocol conversion and also acts as a gateway to NCC 112. A proxy IED is an IED, to which a number of SA devices can be connected. The proxy IED can be configured in SA system 100 instead of the SA devices connected to the proxy IED, being individually configured. Proxy IED 202 performs functions such as protocol conversion, gateway to NCC 112 and data sharing.

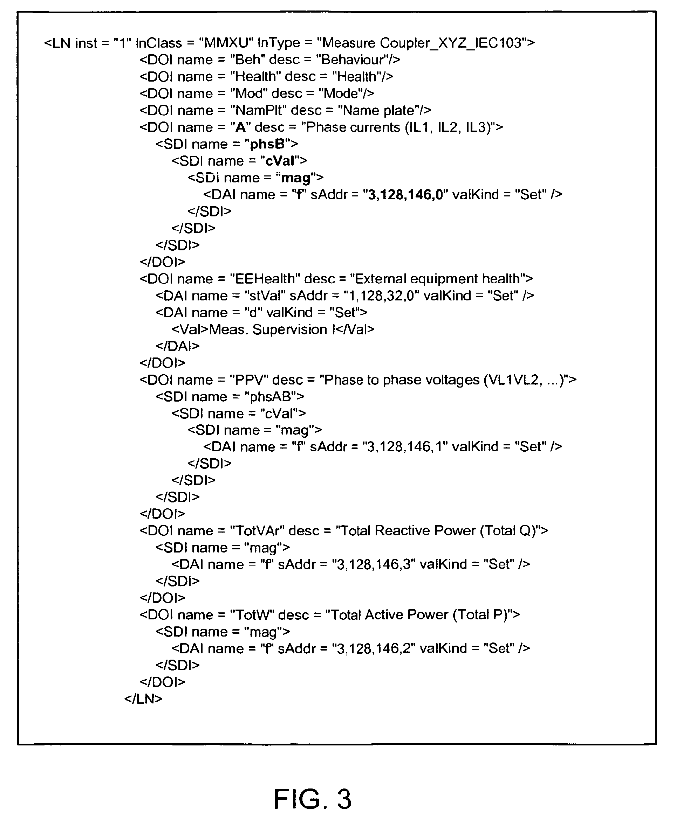

Fig. 3 is an excerpt of an SCL code for configuring proxy IEDs 104 and 106 for converting IEC 60870-5-103 (IEC 103, interface of protection equipment) signals to IEC 61850. The SCL code contains the mappings for an entire measurement function (Instance "1" of Logical Node Class "MMXU") of a particular measure coupler of manufacturer XYZ providing the IEC 103 signals. In detail, the function comprises four measured values corresponding to "Phase B current", "Phase A to Phase B voltage", "Total active power" and "Total reactive power". "Phase B current" comprises an instance of the Data Object "phase current" named **A** (instantiated from the composite Common Data Class (CDC) "WYE"), which is composed of "phase B" **phsB** (instantiated from the simple Common Data Class "CMV"), which comprises an instance of the Data Attribute "complex value" **cVal** (of type Vector), which is composed of "current" **mag** (of type AnalogueValue), which is composed of "floating-point value" **f** (of type FLOAT32) and "address (sAddr)" **3,128,146,0.** The latter indicates the IEC 103 - address "function 128, datacode 146, index 0" for the (signal-) mapping to the IEC 61850 - Name "A.phsB.cVal.mag.f". These mappings remain the same for all the measured signals received according to IEC 103, with only the index Ix changing. In case of earlier protocols other than IEC 103 such as IEC 101, IED 104 the mappings, i.e. at least the content of the **sAddr**-attribute, need to be configured for each measured signal individually.

The following table consists of an excerpt of mapping of 103 Application-layer Service Data Units (ASDUs) to appropriate IEC 61850 names corresponding to the function discussed in the context of Fig.3. The table gives an alternative description of the mappings for the logical node class MMXU, which represents the metering and measurement of parameters such as power, voltages, current and impedances.

| **Ix** | **Func** | **Inf** | **IEC 103** | **LN class** | **DO** | **Attribute** | **CDC** |
|---|---|---|---|---|---|---|---|
| 0 | 128(Z) | 146 | meas. I , U,P,Q: current L2 | MMXU1 | A | phsB | WYE |
| | | | meas. I, U, P,Q:voltage L2 | | | | |
| 1 | 128(Z) | 146 | - L1 | MMXU1 | PPV | phsAB | DEL |
| 2 | 128(Z) | 146 | meas. I, U, P,Q: powerP | MMXU1 | TotW | mag | MV |
| | | | meas. I,U,P,Q:react. Power | | | | |
| 3 | 128(Z) | 146 | Q1 | MMXU1 | TotVAr | mag | MV |

Not depicted in Fig.3 is the fact that each signal is accompanied by a (IEC 61850-) attribute "time stamp" **t** and "quality" **q**, which are (IEC 103-) properties of the signal value and therefore located at the same (IEC 103-) address as the actual signal value.

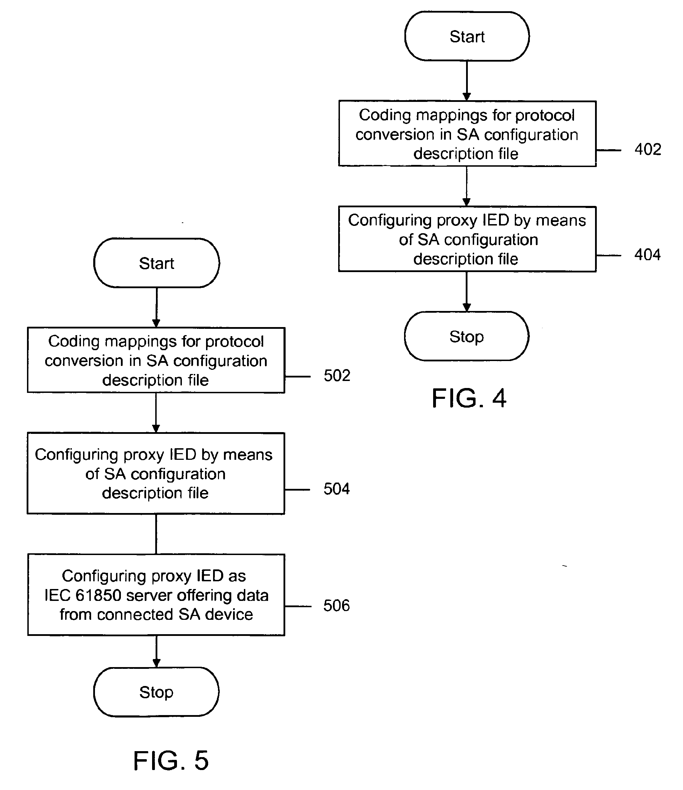

Fig. 4 is a flowchart of a method for configuring IED 104 in SA system 100, in accordance with an embodiment of the present invention. The method for configuring IED 104 in SA system 100 is performed for converting data between non-IEC 61850 communication protocols and IEC 61850 communication protocols. IEDs 104 and 106 in SA system 100 have their respective ICD files, which include their self-description. The ICD files are read by means of configuration tools, which are used for configuring SA system 100. The configuration tools read the ICD file and assign the automation functions to the IEDs.

At step 402, the mappings for protocol conversion between non-IEC 61850 and IEC 61850 protocols are coded in the SCD file. At step 404, proxy IED 104 is configured for protocol conversion, according to the mappings in the SCD file. The detailed methodology of configuring proxy IED 104 for protocol conversion is explained in conjunction with Fig. 5.

Fig. 5 is a flowchart of a method for configuring proxy IED 104 in SA system 100, in accordance with another embodiment of the present invention. In addition to the mappings for protocol conversion, the SCD file contains information about the relationship and communication between devices in SA system 100. At step 502, the mappings required for protocol conversion are coded in the SCD file. At step 504, proxy IED 104 is configured for protocol conversion between non-IEC 61850 and IEC 61850 protocols, according to the information in the SCD file.

In accordance with an embodiment of the present invention, proxy IED 104 is configured as an IEC 61850 server, at step 506. The IEC 61850 server offers data from SA device 102 in SA system 100 to other IEDs. The IEC 61850 server receives the data, according to the non-IEC 61850 protocol from SA device 102. Thereafter, the IEC 61850 server converts the received data according to the IEC 61850 protocol, and then shares the converted data with other IEDs in SA system 100.

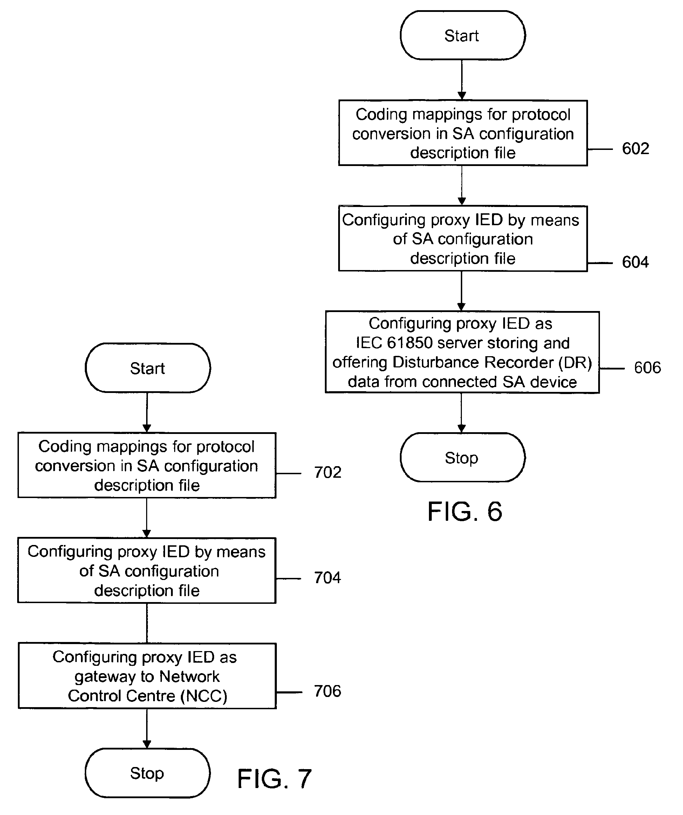

Fig. 6 is a flowchart of a method for configuring proxy IED 104 in SA system 100, in accordance with another embodiment of the present invention. At step 602, the mappings required for protocol conversion are coded in the SCD file. At step 604, proxy IED 104 is configured for protocol conversion between non-IEC 61850 and IEC 61850 protocols, according to the information in the SCD file.

In accordance with an embodiment of the present invention, proxy IED 104 is configured as an IEC 61850 server storing and offering IEC 60870-5-103 Disturbance Recorder (DR) files, at step 606. DR files are tools used to analyse the performance of a protection device in SA system 100. DR files contain the performance details of a device in SA system 100 for a particular time period. This time period for recording the performance data can be controlled by NCC 112. The performance statistics of a device can be recorded during the occurrence of a major disturbance or fault in a substation. Proxy IED 104 receives the IEC 60870-5-103 DR files from SA device 102. Thereafter, proxy IED 104 shares the IEC 60870-5-103 DR files with other IEDs in SA system 100, according to IEC 61850 protocols. The IEC 60870-5-103 DR files are stored in SA device 102, which implements one or more functions and copies the DR files to proxy IED 104. Subsequently, the IEC 60870-5-103 DR files are converted to a Common Format for Transient Data Exchange (COMTRADE). This format provides an ASCII or binary file format for the interchange of transient data produced by fault-recording devices in SA system 100. The DR files in the COMTRADE format are stored in a flash memory of proxy IED 104.

Fig. 7 is a flowchart of a method for configuring proxy IED 106 in SA system 100, in accordance with another embodiment of the present invention. At step 702, the mappings required for protocol conversion are coded in the SCD file. At step 704, proxy IED 106 is configured for protocol conversion between non-IEC 61850 and IEC 61850 protocols, according to the SCD file.

In accordance with another embodiment of the present invention, proxy IED 106 is configured to act as a gateway to NCC 112, at step 706. A gateway is a device that enables the translation and management of communication between networks using different protocols. Proxy IED 106 receives data from other IEDs according to an IEC 61850 protocol and data from SA device 102 according to non-IEC 61850 protocols. NCC 112 acts as an IEC 61850 client for proxy IED 106. Thereafter, proxy IED 106 converts the received data according to the NCC protocols. Examples of the NCC protocols include IEC 60870-5-101, IEC 60870-5-104, DNP3, MODBUS, RP570, INDACTIC35, L&G809, etc. Alternatively, proxy IED 106 receives data from NCC 112 according to the NCC-compatible protocols. Thereafter, proxy IED 106 converts the received data according to the IEC 61850 protocol, and sends the converted data to other IEDs in SA system 100.

In accordance with yet another embodiment of the present invention, IED 202 integrates the above-mentioned functionalities in a single IED.

Various embodiments of the present invention facilitate easy engineering and configuration of substations comprising IEC 61850-compliant IEDs and non-IEC 61850-compliant Substation Automation (SA) devices. A proxy IED can be configured instead of configuring the connected SA devices. This results in the configuration of the substation simple.

Further, the present invention facilitates the storage of Disturbance Recorder (DR) files in the proxy IED. Therefore, the probability that DR data is lost due to the malfunctioning of the SA device is very small, the DR files can be retrieved from the proxy IED, where they are permanently stored until explicitly deleted. This makes the SA system robust.

In addition, the present invention provides an error-free and quick method for converting data according to a non-IEC 61850 protocol to data according to an IEC 61850 protocol. Moreover, the method does not result in heavy traffic on the Ethernet, and therefore, provides an efficient method for protocol conversion.

While the preferred embodiments of the present invention have been illustrated and described, it will be clear that the present invention is not limited to these embodiments only. Numerous modifications, changes, variations, substitutions and equivalents will be apparent to those skilled in the art, without departing from the scope of the present invention, as described in the claims.

### LIST OF DESIGNATIONS

| | |
|---|---|
| 100 | SA system |
| 102 | SA device |
| 104, 106, 202 | IED |
| 108, 110 | OWS, HMI |
| 112 | NCC |
| 114 | Station bus |

## Claims

1. A method of configuring an IEC 61850 compliant Intelligent Electronic Device (IED) as part of a Substation Automation (SA) system (100) with a configuration representation according to the IEC 61R50 standard, wherein the IED is a proxy IED (104, 106; 202) for converting data between a pre-IEC 61850 communication protocol and an IEC 61850 communication protocol, the protocol conversion being based on a set of mappings, **characterized in that** the method comprises:
- representing the mappings according to the IEC 61850 standard in a standardized SA configuration description file according to IEC61850 ; and
- configuring the proxy IED (104, 106; 202) by means of said standardized SA configuration description file.

2. The method according to claim 1, **characterized in that** it comprises
- configuring the proxy IED (104; 202) as an IEC 61850 server offering data from an SA device (102) connected to the proxy IED, via the IEC 61850 protocol, to a further IED (108, 110).

3. The method according to claim 2, **characterized in that** it comprises
- configuring the proxy IED (104; 202) to elaborate one or more mandatory IEC 61850 signals that are not generated by the SA device (102) connected to the proxy IED.

4. The method according to claim 1, **characterized in that** it comprises
- configuring the proxy IED (104; 202) as an IEC 61850 server storing and offering Disturbance Recorder (DR) data from an SA device (102) connected to the proxy IED.

5. The method according to claim 1, **characterized in that** it comprises
- configuring the proxy IED (106) as a gateway to a Network Control Centre (112).

6. An IEC 61850 compliant Intelligent Electronic Device (IED) for a Substation Automation (SA) system (100) with a configuration representation according to the IEC 61850 standard, wherein the IED is a proxy IED (104, 106; 202) for converting data between a pre-IEC 61850 communication protocol and an IEC 61850 communication protocol, the protocol conversion being based on a set of mappings, **characterized in that** the proxy IED (104, 106; 202) is configured by means of a standardized SA configuration description file according to IEC 61856 representing, according to the IEC 61850 standard, the mappings for protocol conversion.

7. The proxy IED (104; 202) according to claim 6, **characterized in that** it is configured as an IEC 61850 server offering data from an SA device (102) connected to the proxy IED, via the IEC 61850 protocol, to a further IED (108, 110).

8. The proxy IED (104; 202) according to claim 7, **characterized in that** it is configured to elaborate one or more mandatory IEC 61850 signals that are not generated by the SA device (102) connected to the proxy IED.

9. The proxy IED (104; 202) according to claim 6, **characterized in that** it comprises a memory for storing Disturbance Recorder (DR) data from the SA device (102) connected to the proxy IED.

10. The proxy IED (106) according to claim 6, **characterized in that** it is configured as a gateway to a Network Control Centre (112).

## Patentansprüche

1. Verfahren zum Konfigurieren eines IEC 61850-kompatiblen Intelligent Electronic Device (IED) als Teil eines Substation Automation (SA)-Systems (100) mit einer Konfigurationsdarstellung gemäß der Norm IEC 61850, wobei das IED ein Proxy-IED (104, 106; 202) zum Umwandeln von Daten zwischen einem vor der Norm IEC 61850 existierenden Kommunikationsprotokoll und einem Kommunikationsprotokoll gemäß IEC 61850 ist, wobei die Protokollumwandlung auf einem Satz Mappings basiert; **dadurch gekennzeichnet, dass** das Verfahren Folgendes umfasst:
- Darstellen der Mappings gemäß der Norm IEC 61850 in einer standardisierten SA-Konfigurationsbeschreibungsdatei nach IEC 61850 und
- Konfigurieren des Proxy-IED (104, 106; 202) mittels der standardisierten SA-Konfigurationsbeschreibungsdatei.

2. Verfahren nach Anspruch 1, **dadurch gekennzeichnet, dass** es Folgendes umfasst:
- Konfigurieren des Proxy-IED (104; 202) als einen IEC 61850-Server, der Daten von einem SA-Gerät (102), das mit dem Proxy-IED verbunden ist, über das IEC 61850-Protokoll einem anderen IED (108, 110) anbietet.

3. Verfahren nach Anspruch 2, **dadurch gekennzeichnet, dass** es Folgendes umfasst:
- Konfigurieren des Proxy-IED (104; 202) zum Elaborieren eines oder mehrerer obligatorischer IEC 61850-Signale, die nicht durch das mit dem Proxy-IED verbundene SA-Gerät (102) erzeugt werden.

4. Verfahren nach Anspruch 1, **dadurch gekennzeichnet, dass** es Folgendes umfasst:
- Konfigurieren des Proxy-IED (104; 202) als einen IEC 61850-Server, der Disturbance Recorder (DR)-Daten von einem mit dem Proxy-IED verbundenen SA-Gerät (102) speichert und anbietet.

5. Verfahren nach Anspruch 1, **dadurch gekennzeichnet, dass** es Folgendes umfasst:
- Konfigurieren des Proxy-IED (106) als einen Gateway zu einem Network Control Centre (112).

6. IEC 61850-kompatibles Intelligent Electronic Device (IED) für ein Substation Automation (SA)-System (100) mit einer Konfigurationsdarstellung gemäß der Norm IEC 61850, wobei das IED ein Proxy-IED (104, 106; 202) zum Umwandeln von Daten zwischen einem vor der Norm IEC 61850 existierenden Kommunikationsprotokoll und einem Kommunikationsprotokoll gemäß IEC 61850 ist, wobei die Protokollumwandlung auf einem Satz Mappings basiert; **dadurch gekennzeichnet, dass** das Proxy-IED (104, 106; 202) mittels einer standardisierten SA-Konfigurationsbeschreibungsdatei gemäß IEC 61850 konfiguriert wird, die gemäß der Norm IEC 61850 die Mappings für die Protokollumwandlung darstellt.

7. Proxy-IED (104; 202) nach Anspruch 6, **dadurch gekennzeichnet, dass** es als ein IEC 61850-Server konfiguriert ist, der Daten von einem SA-Gerät (102), das mit dem Proxy-IED verbunden ist, über das IEC 61850-Protokoll einem anderen IED (108, 110) anbietet.

8. Proxy-IED (104; 202) nach Anspruch 7, **dadurch gekennzeichnet, dass** es dafür konfiguriert ist, ein oder mehrere obligatorische IEC 61850-Signale zu elaborieren, die nicht durch das mit dem Proxy-IED verbundene SA-Gerät (102) erzeugt werden.

9. Proxy-IED (104; 202) nach Anspruch 6, **dadurch gekennzeichnet, dass** es einen Speicher zum Speichern von Disturbance Recorder (DR)-Daten von dem mit dem Proxy-IED verbundenen SA-Gerät (102) umfasst.

10. Proxy-IED (106) nach Anspruch 6, **dadurch gekennzeichnet, dass** es als ein Gateway zu einem Network Control Centre (112) konfiguriert ist.

## Revendications

1. Procédé pour configurer un dispositif électronique intelligent (IED) conforme à la norme IEC 61850 faisant partie d'un système d'automatisation de sous-stations (SA) (100) avec une représentation de configuration selon la norme IEC 61850, où l'IED est IED mandataire (104, 106 ; 202) pour convertir des données entre un protocole de communication antérieur à la norme IEC 61850 et un protocole de communication IEC 61850, la conversion de protocole étant basée sur un ensemble de mises en correspondance, **caractérisé en ce que** le procédé comprend les étapes consistant à :
- représenter les mises en correspondance selon la norme IEC 61850 dans un fichier de description de configuration SA normalisé selon la norme IEC 61850 ; et
- configurer l'IED mandataire (104, 106 ; 202) au moyen dudit fichier de description de configuration SA normalisé.

2. Procédé selon la revendication 1, **caractérisé en ce qu'**il comprend l'étape consistant à :
- configurer l'IED mandataire (104 ; 202) comme serveur IEC 61850 offrant des données provenant d'un dispositif SA (102) connecté à l'IED mandataire, via le protocole IEC 61850, à un autre IED (108, 110).

3. Procédé selon la revendication 2, **caractérisé en ce qu'**il comprend l'étape consistant à :
- configurer l'IED mandataire (104 ; 202) pour élaborer un ou plusieurs signaux d'IEC 61850 mandataire qui ne sont pas générés par le dispositif SA (102) connecté à l'IED mandataire.

4. Procédé selon la revendication 1, **caractérisé en ce qu'**il comprend l'étape consistant à :
- configurer l'IED mandataire (104 ; 202) comme serveur IEC 61850 stockant et offrant des données de perturbographe (DR) provenant d'un dispositif SA (102) connecté à l'IED mandataire.

5. Procédé selon la revendication 1, **caractérisé en ce qu'**il comprend l'étape consistant à :
- configurer l'IED mandataire (106) comme passerelle vers un centre de contrôle de réseau (112).

6. Dispositif électronique intelligent (IED) conforme à la norme IEC 61850 destiné à un système d'automatisation de sous-stations (SA) (100) avec une représentation de configuration selon la norme IEC 61850, où l'IED est un IED mandataire (104, 106 ; 202) pour convertir des données entre un protocole de communication antérieur à la norme IEC 61850 et un protocole de communication IEC 61850, la conversion de protocole étant basée sur un ensemble de mises en correspondance, **caractérisé en ce que** l'IED mandataire (104, 106 ; 202) est configuré au moyen d'un fichier de description de configuration SA normalisé représentant, selon la norme IEC 61850, les mises en correspondance pour la conversion de protocole.

7. IED mandataire (104 ; 202) selon la revendication 6, **caractérisé en ce qu'**il est configuré comme serveur IEC 61850 offrant des données provenant d'un dispositif SA (102) connecté à l'IED mandataire, via le protocole IEC 61850, à un autre IED (108, 110).

8. IED mandataire (104 ; 202) selon la revendication 7, **caractérisé en ce qu'**il est configuré pour élaborer un ou plusieurs signaux d'IEC 61850 mandataire qui ne sont pas générés par le dispositif SA (102) connecté à l'IED mandataire.

9. IED mandataire (104 ; 202) selon la revendication 6, **caractérisé en ce qu'**il comprend une mémoire pour stocker des données de perturbographe (DR) provenant du dispositif SA (102) connecté à l'IED mandataire.

10. IED mandataire (106) selon la revendication 6, **caractérisé en ce qu'**il est configuré comme passerelle vers un centre de contrôle de réseau (112).
